# EUROPEAN PATENT APPLICATION

(11) **EP 2 267 092 A1**
(43) Date of publication of application: **29.12.2010**
(21) Application number: 10005548.2
(22) Date of filing: 28.05.2010
(51) Int. Cl.: C09J 11/04, C09J 11/08

(54) **Adhesive compositions containing bond-strength enhancing agent and methods for producing wood composite using the adhesive compositions**

(30) Priority: 24.06.2009 JP 2009149365
(71) Applicant: Forestry And Forest Products Research Institute, Tsukuba-shi, Ibaraki 305-8687 (JP)
(72) Inventor: Korai, Hideaki, Tsukuba-Shi Ibaraki-Ken 305-8687 (JP)
(74) Representative: Jirotkova, Ivana

(57) **Abstract**

Improved adhesives with significantly-enhanced bond strength is provided in accordance with the present invention, in particular by adding a bond-strength enhancing agent comprising particles to a binder. Such adhesives can be used in a process of producing a woody board, which results in a substantial reduction in amount of the adhesive used, thus leading to a reduction in overall woody board production costs. Methods for producing a woody board are also provided. The method includes the steps of: coating or spraying an adhesive composition on a wood raw material that is an aggregate composed of wood chips; forming the wood raw material coated or sprayed with the adhesive composition into a specified shape; and heat-pressing the wood raw material formed into the specified shape and again forming the heat-pressed wood raw material into the specified shape. The adhesive composition is obtained by adding a bond-strength enhancing agent composed of particles to an adhesive.

## Description

The present application claims the benefit of Japanese patent application no. 2009-149365 filed on June 24, 2009, which is incorporated herein by reference in its entirety for all purposes.

### BACKGROUND OF THE INVENTION

The present invention relates to adhesive compositions obtained by adding a bond-strength enhancing agent, and also relates to methods for producing a woody board using the adhesive compositions. More particularly, the present invention relates to adhesive compositions obtained by adding a bond-strength enhancing agent composed of particles to exhibit extremely high bond strength, which is particularly suitable for producing a woody board, and also relates to methods for producing a woody board using the adhesive compositions.

### DESCRIPTION OF RELATED ART

A woody board, such as fiber board and particle board, is a plate material that is formed by bonding wood chips together with synthetic resin or the like under a constant temperature and pressure. The quality of the woody board made of wood chips largely depends on the size and shape of the wood chips.

Adhesives play an extremely important role in producing the woody board. The adhesives conventionally used in the step of heat-pressing a woody board include a urea resin adhesive, a melamine resin adhesive, a phenolic resin adhesive, and an isocyanate resin adhesive. Selection of the adhesive to be used has a great impact on the performance and production costs of the woody board. Therefore, the adhesive to be used should be selected in consideration of the uses and other aspects of the woody board.

Production cost reduction is essential for woody board manufacturers to remain competitive in the market. There are technical factors that are deeply related to the production cost reduction. These technical factors relate to the cost and amount of adhesive and productivity. Needless to say, a reduction in amount of the adhesive used would result in a reduction in overall woody board production costs.

The conventional arts related to the present invention are disclosed in the following documents:
1. Japanese Patent Application Publication No. 2008-162909 (JP-A-2008-162909);
2. Japanese Patent Application Publication No. 2006-056945 (JP-A-2006-056945);
3. Japanese Patent Application Publication No. 2004-250310 (JP-A-2004-250310);
4. Japanese Patent Application Publication No. 11-333965 (JP-A-11-333965);
5. Japanese Patent Application Publication No. 11-166158 (JP-A-11-166158);
6. Japanese Patent Application Publication No. 09-132731 (JP-A-09-132731);
7. Published Japanese Translation of PCT application No. 2002-535185 (JP-A-2002-535185);
8. Japanese Patent Application Publication No. 2000-296502 (JP-A-2000-29650);
9. Japanese Patent Application Publication No. 2006-231621 (JP-A-2006-231621);
10. Japanese Patent Application Publication No. 2000-292056 (JP-A-2000-292056); and
11. Japanese Patent Application Publication No. 08-57803 (JP-A-08-57803).

### PROBLEM TO BE SOLVED BY THE INVENTION

Objects of the present invention include but are not limited to: providing adhesive compositions that have sufficient bond strength with a relatively small amount of the adhesive composition used; providing methods for producing a woody board using the adhesive compositions; ensuring superior bond strength of the adhesive compositions, while reducing the amount of the adhesive composition used, thereby to reduce costs of products in a variety of fields; and achieving production of quality products at low cost with high productivity particularly for woody board production.

### SUMMARY OF THE INVENTION

In order to solve the foregoing problems, the present invention provides adhesive compositions obtained by adding a bond-strength enhancing agent comprising particles to a binder.

In accordance with the adhesive compositions, the binder may be a thermosetting adhesive, and the bond-strength enhancing agent may be composed of the particles.

Also, in accordance with any one of the adhesive compositions, the bond-strength enhancing agent may be added at a predetermined rate from 0.05 to 10 weight percent of the binder.

Further, in accordance with any one of the adhesive compositions, the particles of the bond-strength enhancing agent may have a predetermined particle size of 30 mesh or less.

Furthermore, in accordance with any one of the adhesive compositions described above, the thermosetting adhesive may be selected from the group consisting of a urea resin adhesive, a melamine resin adhesive, a phenolic resin adhesive, and an isocyanate resin adhesive.

In order to solve the foregoing problems, the present invention also provides a method for producing a woody board, the method including the steps of: coating or spraying an adhesive composition on a wood raw material that is an aggregate composed of a single plate, a fiber article, a thin stick article, a particle article, a strand article, or the like; forming the wood raw material coated or sprayed with the adhesive composition into a specified shape; and heat-pressing the wood raw material formed into the specified shape and forming the heat-pressed wood raw material into the specified shape, in which the adhesive composition is obtained by adding a bond-strength enhancing agent comprising particles to a thermosetting adhesive.

In accordance with the method for producing a woody board, the bond-strength enhancing agent may be composed of the particles, and may be added at a predetermined rate from 0.05 to 10 weight percent of the thermosetting adhesive.

Further, in accordance with any one of the methods for producing a woody board, the particles of the bond-strength enhancing agent may have a predetermined particle size of 30 mesh or less.

Furthermore, in accordance with any one of the methods for producing a woody board, the thermosetting adhesive may be selected from the group consisting of a urea resin adhesive, a melamine resin adhesive, a phenolic resin adhesive, and an isocyanate resin adhesive.

### BRIEF DESCRIPTION OF THE DRAWINGS

The present invention will hereinafter be described in conjunction with the appended drawing figures:

FIG. 1 is a table representing the relationship between the rate of polyethylene added to a binder and the resulting bond strength; and

FIG. 2 is a table representing the bond strength that results from adding each of various bond-strength enhancing agents to the binder.

### DETAILED DESCRIPTION

The ensuing detailed description provides exemplary embodiments only, and is not intended to limit the scope, applicability, or configuration of the invention. Rather, the ensuing detailed description of the exemplary embodiments will provide those skilled in the art with an enabling description for implementing an embodiment of the invention. It should be understood that various changes may be made in the function and arrangement of elements without departing from the spirit and scope of the invention as set forth in the appended claims.

In order to obtain an adhesive composition according to the present invention, any sprayable adhesive may be used as a binder.

Any organic or inorganic compound, including zeolite, clay, various thermoplastics, plastic, cellulose, and acetylated cellulose, may be used as a raw material of a bond-strength enhancing agent to be added to the binder. A desirable average particle size of zeolite, polyethylene, cellulose, or acetylated cellulose is 30 mesh or less. The adhesive composition is sprayed in the process of producing a woody board. Therefore, the amount of the bond-strength enhancing agent added to the binder needs to be adjusted to the extent that the adhesive composition is sprayable. The bond-strength enhancing agent is composed of particles.

Examples of the present invention will be described below. **Example 1:** A bond-strength enhancing agent was added to a binder to obtain an adhesive composition. Using this adhesive composition, prototype woody boards were made in order to conduct experiments in the following manner to find out the relationship between an amount of the bond-strength enhancing agent added to the binder and the resulting bond strength.

### (1): Production of Woody Elements

Cypress wood was used as a raw material for the production of woody boards. The cypress wood was cut with a circular knife ring into strands to be used as the raw material for the production of the woody boards. These strands were dried and used as the raw material for the production of the woody boards.

### (2): Adhesive Coating

A thermosetting adhesive or a melamine resin adhesive was used as the binder. A particulate bond-strength enhancing agent or thermoplastic polyethylene was added to the melamine resin adhesive. The thermoplastic polyethylene was added with one of the five different polyethylene amounts of 0, 0.5, 0.75, 1, and 3 weight percent of the melamine resin adhesive. The woody elements were placed in a rotary drum coating device to spray each melamine resin adhesive, which is mixed with the one of the five different amounts of the polyethylene, on the woody elements. The polyethylene has a particle size of 200 mesh or less.

### (3): Production of Woody Boards

After each melamine resin adhesive was sprayed on the woody elements, the woody elements were formed into a mat using a forming box having the dimensions of 30cm x 30cm. The mat was heat-pressed to obtain a woody board. The woody board was 1cm thick. A target board dense was set at 0.7g/cm³. The mat was heat-pressed at a heat-pressing temperature of 180°C for 10 minutes. Under the same conditions, a piece of woody board was produced using each of the different amounts of the polyethylene. The resulting bond strength of the woody boards respectively produced using the different amounts of the polyethylene was determined according to JIS A 5908:2003.

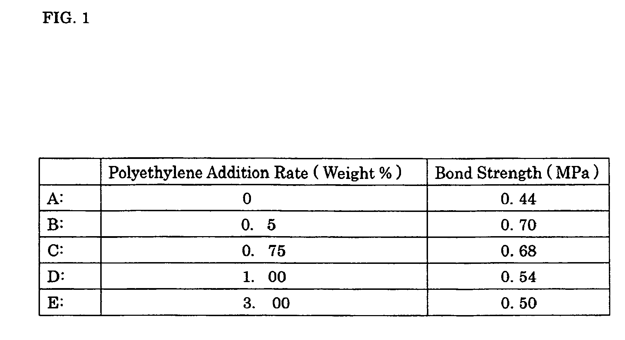

In addition, an optimum rate of the polyethylene to be added to the melamine resin adhesive was determined. In FIG. 1, Table 1 represents the relationship between the rate of the polyethylene added to the melamine resin adhesive and the resulting bond strength. As is clear from Table 1, the maximum bond strength of 0.7 Mpa was obtained when the polyethylene was added at the rate of 0.5 weight percent of the melamine resin adhesive. The bond strength was increased by about 60%, compared to the case when the polyethylene was added at the rate of 0 weight percent of the melamine resin adhesive. No significant increase in bond strength was observed when the polyethylene was added at the rate of more than 0.5 weight percent of the melamine resin adhesive.

As seen from the test results shown in Table 1 in FIG. 1, when the bond-strength enhancing agent composed of polyethylene particles was added in the amount of 0.5 weight percent of the melamine resin adhesive, the resulting bond strength was increased by about 1.6 times compared to the case when no bond-strength enhancing agent was added to the melamine resin adhesive, that is, where the melamine resin adhesive was used alone. That means, in the case of (B) in Table 1, an amount of the melamine resin adhesive necessary to obtain bond strength equal to the bond strength obtained in the case of (A) is reduced by 60% compared to the case of (A). This results in a substantial reduction in the amount of the melamine resin adhesive used, thus achieving a significant cost reduction.

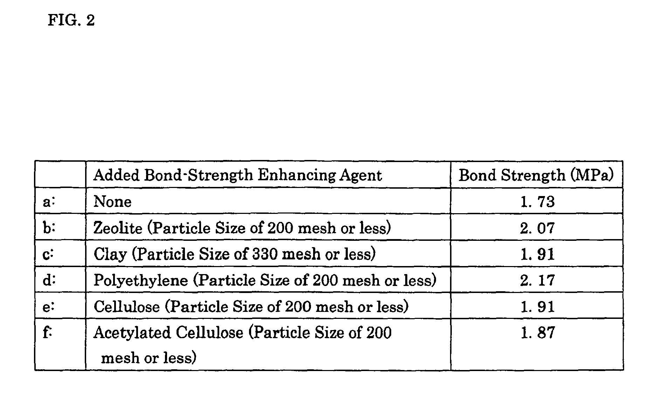

**Example 2:** An adhesive composition was sprayed on cypress strands or wood raw materials. The wood raw materials were formed into a specified shape using a forming box, and were then heat-pressed and again formed into the specified shape, thereby producing a woody board. A thermosetting adhesive or an isocyanate resin adhesive was used as the binder. Various substances that will be described below were used as the bond-strength enhancing agent. The various substances were each added to the isocyanate resin adhesive with an amount of 0.75 weight percent of the isocyanate resin adhesive to measure the resulting bond strength. The measurement results are shown in Table 2 in FIG. 2. In the Example 1, the polyethylene particles having a particle size of 200 mesh or less were employed as a raw material of the bond-strength enhancing agent to be added to the binder. However, as described above and shown in the Example 2, any organic or inorganic compound, including zeolite, clay, various thermoplastics, plastic, cellulose, and acetylated cellulose, may be used as the bond-strength enhancing agent.

It should now be appreciated that the present invention provides advantageous adhesive compositions containing bond-strength enhancing agent and methods for producing woody board using adhesive compositions.

Although the invention has been described in connection with various illustrated embodiments, numerous modifications and adaptations may be made thereto without departing from the spirit and scope of the invention as set forth in the claims.

## Claims

1. An adhesive composition obtained by adding a bond-strength enhancing agent comprising particles to a binder.

2. The adhesive composition according to claim 1, wherein the binder is a thermosetting adhesive, and the bond-strength enhancing agent is composed of the particles.

3. The adhesive composition according to claim 1, wherein the bond-strength enhancing agent is added at a predetermined rate from 0.05 to 10 weight percent of the binder.

4. The adhesive composition according to claim 1, wherein the particles of the bond-strength enhancing agent have a predetermined particle size of 30 mesh or less.

5. The adhesive composition according to claim 2, wherein the thermosetting adhesive is selected from a group consisting of a urea resin adhesive, a melamine resin adhesive, a phenolic resin adhesive, and an isocyanate resin adhesive.

6. A method for producing a woody board, comprising:
one of coating or spraying an adhesive composition on a wood raw material, said wood raw material comprising an aggregate composed of a single plate, a fiber article, a thin stick article, a particle article, or a strand article;
forming the wood raw material coated or sprayed with the adhesive composition into a specified shape; and
heat-pressing the wood raw material formed into the specified shape and forming the heat-pressed wood raw material into the specified shape,
wherein the adhesive composition is obtained by adding a bond-strength enhancing agent comprising particles to a thermosetting adhesive.

7. The method for producing a woody board according to claim 6, wherein the bond-strength enhancing agent is composed of the particles and is added at a predetermined rate from 0.05 to 10 weight percent of the thermosetting adhesive.

8. The method for producing a woody board according to claim 6, wherein the particles of the bond-strength enhancing agent have a predetermined particle size of 30 mesh or less.

9. The method for producing a woody board according to claim 6, wherein the thermosetting adhesive is selected from a group consisting of a urea resin adhesive, a melamine resin adhesive, a phenolic resin adhesive, and an isocyanate resin adhesive.
